# EUROPEAN PATENT APPLICATION

(11) **EP 4 744 953 A1**
(43) Date of publication of application: **20.05.2026**
(21) Application number: 24843311.2
(22) Date of filing: 10.06.2024
(51) Int. Cl.: B60L 58/20, B60L 58/13

(54) **VEHICLE CHARGING DEVICE**

(30) Priority: 14.07.2023 KR 20230092067
(71) Applicant: LG INNOTEK CO. LTD, Gangseo-gu Seoul 07796 (KR)
(72) Inventor: LEEM, Sung hyun, Seoul 07796 (KR)
(74) Representative: M. Zardi & Co S.A.
(86) International application number: PCT/KR2024/007863
(87) International publication number: WO 2025/018590

(57) **Abstract**

A vehicle charging device according to an embodiment of the present invention comprises: a vehicle battery for driving a vehicle motor; an electric vehicle communication controller (EVCC) that performs communication for charging the vehicle battery; a starting battery for driving a vehicle starting motor; and a battery management system (BMS) for monitoring the vehicle battery and the starting battery, wherein the EVCC receives charging state information of the starting battery and controls the BMS to charge the starting battery through the vehicle battery according to the charging state information of the starting battery.

## Description

### [Technical Field]

The present invention relates to a vehicle charging device.

### [Background Art]

Eco-friendly vehicles such as electric vehicles (EVs) or plug-in hybrid electric vehicles (PHEVs) use electric vehicle supply equipment (EVSE) installed at charging stations to charge their batteries.

Various protocols are being actively established for the interaction between electric vehicles (EVs) and electric vehicle supply equipment (EVSE). The protocols related to electric vehicle charging can broadly be categorized into charging systems, charging interfaces, and communication protocols.

However, since different countries or automobile manufacturers adopt different protocols, the Electric Vehicle's charging apparatus, battery pack, and Battery Management System (BMS), must be developed and designed according to each specific protocol.

### [Detailed Description of the Invention]

### [Technical Subject]

The technical problem to be solved by the present invention is to provide a vehicle charging device.

### [Technical Solution]

To solve the above technical problems, a vehicle charging device according to an embodiment of the present invention comprises: a vehicle battery for driving a vehicle motor; an electric vehicle communication controller (EVCC) that performs communication for charging the vehicle battery; a starting battery for driving a vehicle starting motor; and a battery management system (BMS) for monitoring the vehicle battery and the starting battery, wherein the EVCC receives charging state information of the starting battery and controls the BMS to charge the starting battery through the vehicle battery according to the charging state information of the starting battery.

The EVCC may periodically receive information regarding the ambient temperature and the state of charge of the starting battery, starting from the time point when the vehicle's ignition is turned off.

The EVCC may control the battery management system (BMS) to charge the starting battery via the vehicle battery when the charge level of the starting battery is lower than a pre-set value.

The BMS may turn the connection between the vehicle battery and the starting battery on or off in accordance with the control of the EVCC.

When the charge level of the starting battery is lower than a first value, the BMS may turn on the connection between the vehicle battery and the starting battery, and when the charge level of the starting battery is greater than a second value, the BMS may turn off the connection between the vehicle battery and the starting battery.

The EVCC may transmit the charging state information of the starting battery to the user's terminal, and may control the BMS to charge the starting battery via the vehicle battery in accordance with the user's control.

### [Advantageous Effects]

According to the present embodiments, the EVCC can actively address long-term parking and discharge of the starting battery and prevent discharge by periodically monitoring the charge of the starting battery.

Furthermore, while the conventional method of charging the starting battery by starting the vehicle engine causes safety issues and exhaust fume problems, the present embodiment can prevent these issues by connecting and charging the vehicle battery and the starting battery.

### [Brief Description of Drawings]

FIG. 1 is a block diagram of a vehicle charging device according to the present embodiment.
FIG. 2 is a block diagram of a vehicle charging device according to another embodiment of the present invention.
FIGS. 3 to 5 are circuit diagrams and diagrams illustrating circuit diagrams of a vehicle charging device according to the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

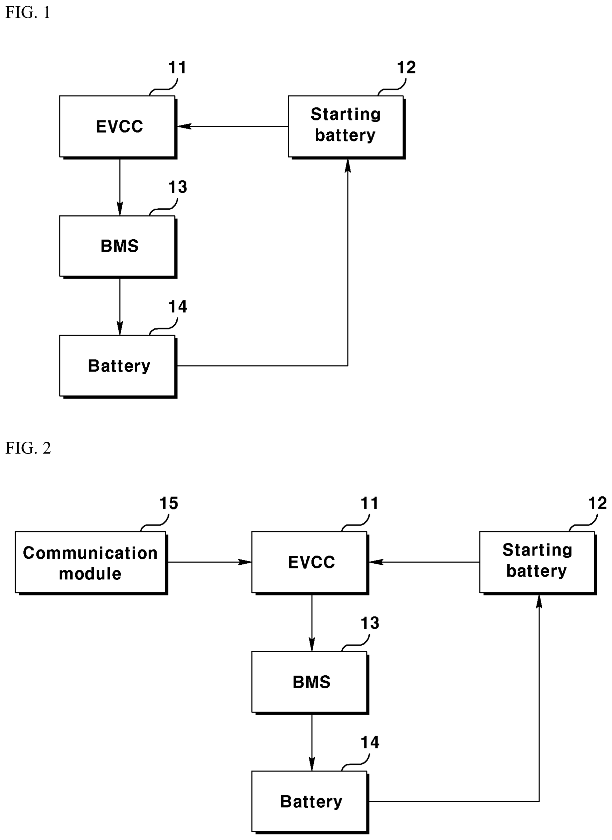

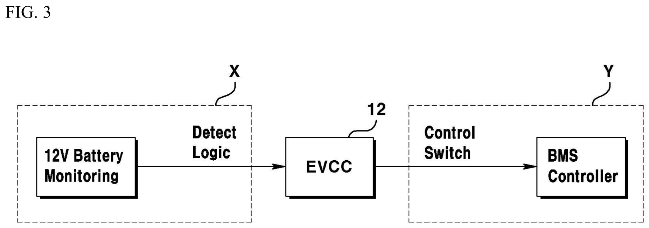

FIG. 1 is a block diagram of a vehicle charging device according to the present embodiment; FIG. 2 is a block diagram of a vehicle charging device according to another embodiment of the present invention; and FIGS. 3 to 5 are circuit diagrams and diagrams illustrating circuit diagrams of a vehicle charging device according to the present embodiment.

The vehicle charging device according to the present embodiment may include a vehicle battery **14,** an EVCC **11**, a starting battery **12,** and a BMS **13.**

The vehicle battery **14** is for driving the vehicle motor and can be disposed within an electric vehicle. The vehicle is an electric vehicle (EV), and the vehicle battery **14** can be charged from the electric vehicle supply equipment (EVSE). An EVSE is a device that supplies AC or DC and can be disposed at a charging station or within a home. The EVSE is not limited to a specific location and can also be implemented to be portable.

An electric vehicle communication controller (EVCC) **11** can communicate to charge a vehicle battery **14.** The EVCC **11** is a component included in a vehicle and can be connected to an electronic control unit (ECU) within the vehicle. The EVCC **11** can perform charging signals and control charging power within the vehicle. The EVCC **11** can be connected to a BMS **13** via a wire or wireless connection. The EVCC **11** can receive charging status information of the vehicle battery **14** and the starting battery **12** from the BMS **13.** The EVCC **11** can transmit charging status information of the vehicle battery **14** and the starting battery **12** to a user's terminal via a communication module **15.**

The starting battery **12** is for driving the starting motor and the charging capacity of the starting battery **12** may be smaller than the charging capacity of the vehicle battery **14.** While the vehicle battery **14** is charged from the EVSE, the starting battery **12** is not charged from the EVSE and can only be charged while the vehicle is running. When the starting battery **12** is discharged, the starting motor will not start, making the vehicle inoperable. The starting battery **12** may be discharged when the ambient temperature is low or the vehicle is not driven due to long-term parking.

The battery management system (BMS) **13** can monitor the voltage, current, and temperature of the vehicle battery **14** and the starting battery **12** to maintain them in an optimal state. The BMS **13** can comprehensively manage the vehicle battery **14** and the starting battery **12.** The BMS **13** is connected to each of the vehicle battery **14** and the starting battery **12** and can individually manage them. The BMS **13** can transmit the charging status information of the vehicle battery **14** and the starting battery **12** to the EVCC **11.**

The EVCC **11** can receive charging status information of the vehicle battery **14** and the starting battery **12.** The EVCC **11** can control the BMS **13** to charge the starting battery **12** through the vehicle battery **14** according to the charging status information of the starting battery **12.** The EVCC **11** can transmit the charging status information of the starting battery **12** to the user's terminal through the communication module **15.** The BMS **13** can charge the starting battery **12** through the vehicle battery **14** according to the user's control.

The EVCC **11** can periodically receive information on the ambient temperature of the starting battery **12** and the charging status of the starting battery **12** from the time when the vehicle's ignition is turned off. A temperature sensor for sensing the ambient temperature may be disposed in the starting battery **12.** Considering that the discharge speed of the starting battery **12** becomes faster when the ambient temperature is below a reference value (e.g., below zero), the possibility of discharge of the starting battery **12** can be determined.

The EVCC **11** can determine the possibility of discharge based on the voltage detected from the starting battery **12.** For example, the EVCC **11** can determine that there is a high possibility of discharge when the voltage detected from the starting battery **12** is less than approximately 12.4 V. This is merely exemplary, and the EVCC **11** can determine the possibility of discharge by comprehensively considering the voltage, current, and ambient temperature of the starting battery **12.**

The EVCC **11** can control the BMS **13** to charge the starting battery **12** via the vehicle battery **14** when the charge amount of the starting battery **12** is lower than a preset value. Here, the preset value may mean a value before the starting battery **12** is discharged, and may mean a charge amount of the starting battery **12** to drive the starting motor.

The BMS **13** can turn on or off the connection between the vehicle battery **14** and the starting battery **12** under the control of the EVCC **11.** A switching element for selective connection may be arranged between the vehicle battery **14** and the starting battery **12.** The BMS **13** can control the on or off of the switching element under the control of the EVCC **11.** A charging module for charging the starting battery **12** through the vehicle battery **14** may be arranged between the vehicle battery **14** and the starting battery **12.** When the charging specifications of the vehicle battery **14** and the starting battery **12** are different, the charging module may include a configuration such as an inverter unit and a booster unit in which a power conversion operation is performed in order to smoothly charge the starting battery **12** from the vehicle battery **14.**

When the charge amount of the starting battery **12** is lower than the first value, the BMS **13** can turn on the connection between the vehicle battery **14** and the starting battery **12.** When the charge amount of the starting battery **12** is greater than the second value, the BMS **13** can turn off the connection between the vehicle battery **14** and the starting battery **12.** Here, the second value may be a value greater than the first value. The first value may mean a charge amount at which the starting battery **12** is at risk of being discharged, and the second value may mean a charge amount sufficient to drive the starting motor. The first value and the second value may be values preset by the user.

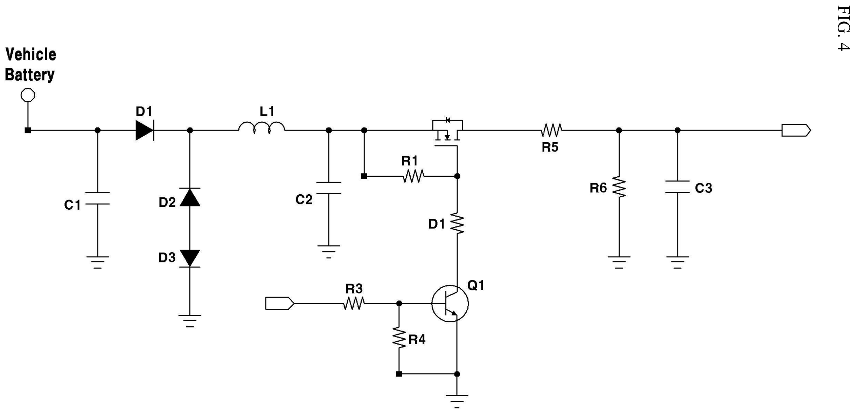

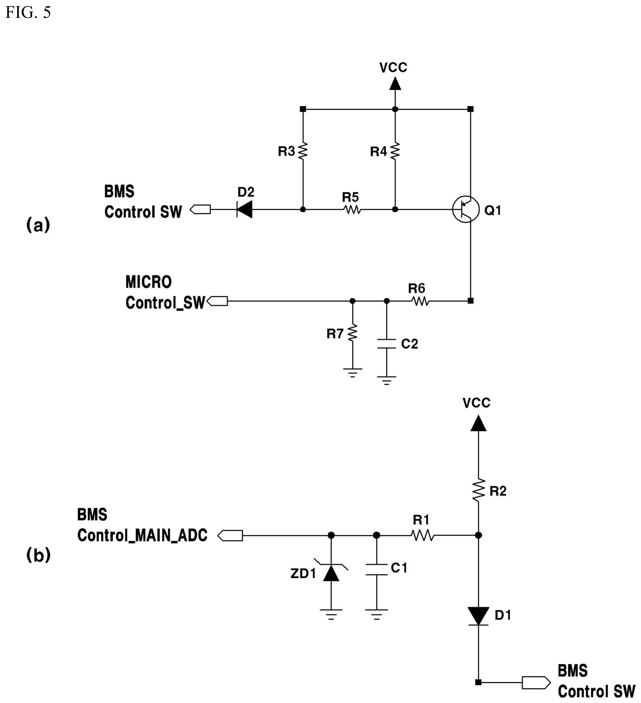

FIG. 4 is a circuit diagram for the X block diagram of FIG. 3, and FIG. 5 is a circuit diagram for the Y block diagram of FIG. 3. Referring to FIG. 4, one end (Vehicle Battery) of the circuit diagram of the X block diagram may be connected to a starting battery, and the other end (Vehicle Battery_ADC) may be connected to a starting motor that outputs the output of the starting battery. A circuit (Micro Controller Sensing_EN) for detecting the voltage of the starting battery may be added to monitor the charge status information of the starting battery. The circuit for detecting the voltage of the starting battery may be connected to a BMS. A diode for preventing reverse voltage may be connected to the circuit diagram in which the voltage of the starting battery is outputted to the starting motor, and a resistor and a switching element may be appropriately connected so that the BMS can detect the voltage of the starting battery according to the law of resistance distribution.

Referring to FIG. 5(a), one end (Micro Control_SW) of the circuit diagram of the Y block diagram may be connected to an EVCC that generates a control signal, and the other end (BMS Control SW) may be connected to a BMS that receives the control signal generated from the EVCC. Referring to FIG. 5(b), one end (BMS Contorl_SW) of the circuit diagram of the Y block diagram may be connected to a BMS that generates a control signal for connecting a vehicle battery and a starting battery, and the other end (BMS Control_MAIN_ADC) may be connected to a switching element between the vehicle battery and the starting battery that outputs the control signal generated from the BMS. The configuration of the circuit diagram may vary depending on the charging specifications of the vehicle battery and the starting battery, and is not necessarily limited thereto.

According to the present embodiments, by periodically monitoring the charging of the starting battery, the EVCC can proactively address long-term parking and starting battery discharge, and prevent discharge. Furthermore, while the existing method of charging the starting battery by starting the vehicle's engine poses safety and exhaust emissions issues, the present embodiments prevent these issues by connecting the vehicle battery and the starting battery for charging.

Those skilled in the art related to the present embodiment will understand that the above-described description can be implemented in a modified form without departing from the essential characteristics thereof. Therefore, the disclosed methods should be considered from an illustrative rather than a restrictive perspective. The scope of the present invention is indicated by the claims, not the above description, and all differences within the scope equivalent thereto should be interpreted as being included in the present invention.

## Claims

1. A vehicle charging device comprising:
a vehicle battery for driving a vehicle motor;
an electric vehicle communication controller (EVCC) that performs communication for charging the vehicle battery;
a starting battery for driving a vehicle starting motor; and
a battery management system (BMS) for monitoring the vehicle battery and the starting battery,
wherein the EVCC receives charging state information of the starting battery and controls the BMS to charge the starting battery through the vehicle battery according to the charging state information of the starting battery.

2. The vehicle charging device according to claim 1,
wherein the EVCC periodically receives information regarding the ambient temperature and the state of charge of the starting battery from the time point when the vehicle's ignition is turned off.

3. The vehicle charging device according to claim 1,
wherein the EVCC controls the BMS to charge the starting battery via the vehicle battery when the charge level of the starting battery is lower than a pre-set value.

4. The vehicle charging device according to claim 1,
wherein the BMS turns the connection between the vehicle battery and the starting battery on or off in accordance with the control of the EVCC.

5. The vehicle charging device according to claim 1,
wherein the BMS turns on the connection between the vehicle battery and the starting battery when the charge level of the starting battery is lower than a first value, and
wherein the BMS turns off the connection between the vehicle battery and the starting battery when the charge level of the starting battery is greater than a second value.

6. The vehicle charging device according to claim 1,
wherein the EVCC transmits the charging state information of the starting battery to the user's terminal, and controls the BMS to charge the starting battery via the vehicle battery in accordance with the user's control.
